Europäisches Patentamt

European Patent Office

Office européen des brevets

(19)

(11) Veröffentlichungsnummer: **0 024 480**
**A2**

(12) # EUROPÄISCHE PATENTANMELDUNG

(21) Anmeldenummer: **80102955.4**

(22) Anmeldetag: **28.05.80**

(51) Int. Cl.³: **B 23 B 45/00**

(30) Priorität: **17.08.79 DE 7923500 U**

(43) Veröffentlichungstag der Anmeldung:
**11.03.81 Patentblatt 81/10**

(84) Benannte Vertragsstaaten:
**CH DE FR GB IT LI NL**

(71) Anmelder: **ROBERT BOSCH GMBH**
**Postfach 50**
**D-7000 Stuttgart 1(DE)**

(72) Erfinder: **Gerber, Hans**
**Bahnweg 10**
**CH-4708 Luterbach(CH)**

(72) Erfinder: **Hidvéghy, Ivan, Dipl.-Ing.**
**Schmiedenweg 7/4**
**CH-4528 Zuchwil(CH)**

(72) Erfinder: **Wessel, Claude**
**Pfeidstrasse 17**
**CH-2555 Brügg(CH)**

(72) Erfinder: **Schaal, Günter**
**Am Ochsenwald 25**
**D-7000 Stuttgart 80(DE)**

(72) Erfinder: **Stürmer, Marian**
**Keltenstrasse 4**
**D-7022 Leinfelden 1(DE)**

(72) Erfinder: **Vogel, Eberhard, Ing.grad.**
**Rosswiesen 11**
**D-7405 Dettenhausen(DE)**

(54) **Elektrohandwerkzeug.**

(57) Es wird ein Elektrohandwerkzeug, wie handgeführte Bohr-, Fräs-, Sägemaschine od. dgl., insbesondere Heimwerker-Kombinationsmaschine angegeben, welches ein erhebliches Maß an Sicherheit und Schutz für Benutzer und Elektrohandwerkzeug bietet und darüber hinaus einen optimalen Einsatz des Elektrohandwerkzeugs beim jeweiligen Arbeitsvorgang ermöglicht. Hierzu ist auf dem Gehäuse (10) ein optisches Anzeigefeld (15; 20) einer Anzeigevorrichtung (16) angeordnet, auf welchem die Kenndaten des jeweiligen Betriebszustands, wie Einschaltung, Rechts- oder Linkslauf, Überlastung, Drehzahl und dgl. abgelesen werden können.

Fig.1

EP 0 024 480 A2

Croydon Printing Company Ltd.

5652
24. 7. 1979 Vo

ROBERT BOSCH GMBH, 7000 Stuttgart 1

Elektrohandwerkzeug

Stand der Technik

Die Erfindung geht aus von einem Elektrohandwerkzeug,
wie handgeführte Bohr-, Fräs-, Sägemaschine  od. dgl.,
nach der Gattung des Hauptanspruchs.

Bei bekannten Elektrohandwerkzeugen dieser Art sind je
nach Ausstattung des Elektrohandwerkzeugs eine Vielzahl
von Dreh- oder Schwenkhebelschalter vorgesehen, mit
welchen der gewünschte Betriebszustand eingestellt
werden kann. Diese Schalter sind an den verschiedensten
Stellen des Gehäuses angeordnet. Der jeweils eingestellte Betriebszustand des Elektrohandwerkzeugs ist an der
jeweiligen Stellung der verschiedenen Schalter abzulesen.

Bei der Vielzahl der bereits heute angebotenen Einstellmöglichkeiten an einem Elektrohandwerkzeug ist es dem
Benutzer häufig unmöglich, die jeweilige Schaltstellung
der an verschiedenen Orten des Gehäuses angeordneten
Schalter auf einen Blick schnell und rasch zu erfassen,
um somit den Betriebszustand des Elektrowerkzeugs zu
kontrollieren. Somit passieren aufgrund irrtümlicher
Vorstellungen über den Betriebszustand des Elektrowerkzeugs häufig Pannen, die den Benutzer und auch das
Elektrohandwerkzeug in seiner Funktion gefährden und
zu einer Verschlechterung des Arbeitsergebnisses führen.

Vorteile der Erfindung

Das erfindungsgemäße Elektrohandwerkzeug mit den kennzeichnenden Merkmalen des Hauptanspruchs hat demgegenüber den Vorteil, daß dem Benutzer eine ständige optische
Überwachung des Betriebszustandes des Elektrohandwerkzeugs ermöglicht wird. Der Benutzer kann während des
Ansetzens des Elekrohandwerkzeugs oder gar während des
Arbeitsvorgangs mit einem einzigen Blick den Betriebszustand des Elektrohandwerkzeugs feststellen und ständig
kontrollieren und auch eine Änderung wahrnehmen. Es kann
also z.B. nicht passieren, daß der Benutzer mit einer
kleinen Drehzahl zu bohren beabsichtigt und bei Durchführung des Bohrvorgangs plötzlich und unerwartet eine
sehr große Drehzahl auftritt, was zur Beschädigung des
Elektrohandwerkzeugs oder des zu bearbeitenden Werkstücks
führen kann. Dies trägt auch gleichzeitig zur Sicherheit
des Benutzers bei, denn z.B. ein Irrtum über die Drehrichtung des Elektromotors kann, z.B. bei Verwendung
einer Heimwerker-Kombinationsmaschine als Fräs- oder
Sägemaschine, eine erhebliche Gefährdung des Benutzers herbeiführen. Die optische Anzeige einer Überlastung
mittels des Anzeigefeldes z.B. ermöglicht eine volle
Leistungsausnutzung des Elektrohandwerkzeugs bei gleichzeitiger Schonung des Elektrohandwerkzeugs und Verringerung der Unfallgefahr. Die Anzeige der Überlastung
signalisiert dem Benutzer, daß er bereits zuviel
Leistung aus dem Elektrohandwerkzeug verlangt, d.h.
daß der Überlastschutz des Elektrohandwerkzeugs bei
Fortsetzung dieses Betriebszustandes das Elektrohandwerkzeug abschalten wird. Der Benutzer kann also die
dem Elektrohandwerkzeug abgeforderte Leistung verringern,
so daß einerseits dieses geschont und andererseits die
Unfallgefahr durch brüskes Abschalten des Elektrohandwerkzeugs beim Ansprechen des Überlastschutzes beseitigt wird. Damit kann zugleich auch eine Beschädigung
der Werkstücke infolge unerwarteten Abschaltens des
Elektrohandwerkzeugs verhindert werden.

Durch die in den Unteransprüchen aufgeführten Maßnahmen
sind vorteilhafte Weiterbildungen und Verbesserungen
des im Hauptanspruch angegebenen Elektrohandwerkzeugs
möglich.

Zeichnung

Die Erfindung ist anhand von in der Zeichnung dargestellten Ausführungsbeispielen in der nachfolgenden
Beschreibung näher erläutert. Dabei zeigen:

Fig. 1     eine perspektivische Ansicht einer
           Handbohrmaschine,

Fig. 2      eine vergrößerte Darstellung einer
            Draufsicht eines Anzeigefelds einer
            Anzeigevorrichtung der Handbohrmaschine in Fig. 1,

Fig. 3      einen Schnitt längs der Linie III
            - III in Fig. 2 mit schematisch
            ergänzter Anzeigevorrichtung,

Fig. 4      eine vergrößerte Darstellung einer
            Draufsicht eines Anzeigefelds einer
            Anzeigevorrichtung gemäß einem
            zweiten Ausführungsbeispiel.

<u>Beschreibung der Ausführungsbeispiele</u>

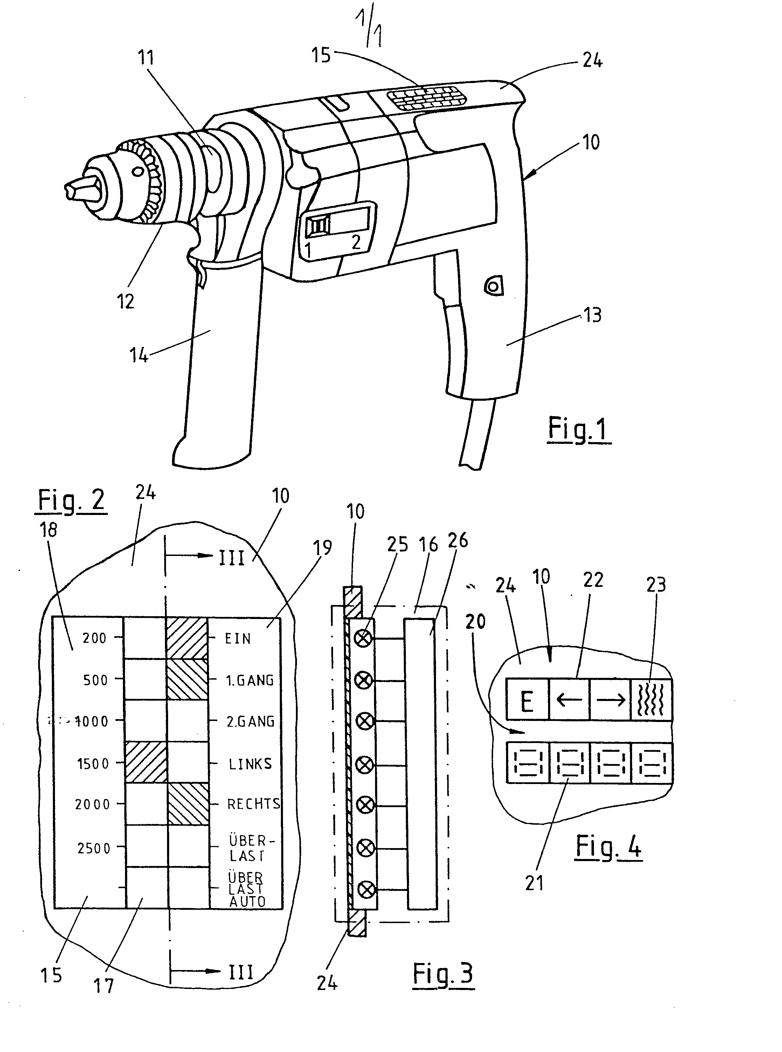

Die in Fig. 1 als Beispiel eines Elektrohandwerkzeugs
dargestellte Handbohrmaschine weist ein Gehäuse 10 auf.
Eine aus dem Gehäuse 10 austretende Bohrspindel 11
trägt ein Spannfutter 12 zur Aufnahme eines Bohrers und
wird in bekannter Weise von einem nicht dargestellten
Elektromotor unter Zwischenschaltung eines ebenfalls
nicht gezeigten Übersetzungsgetriebes angetrieben. Das
Gehäuse 10 trägt an der Unterseite einen angeformten
pistolenartigen Handgriff 13. Zur Erleichterung des
Bohrvorgangs kann - wie in Fig. 1 dargestellt - am
Gehäuse 10 nahe der Austrittsstelle der Bohrspindel 11
noch ein weiterer Handgriff 14 festgeklemmt sein.

Auf dem Gehäuse 10 ist ein Anzeigefeld 15 einer Anzeigevorrichtung 16 (in Fig. 3 durch strichpunktierte Umrahmung schematisch angedeutet) angeordnet. Das Anzeigefeld 15 ist in Fig. 2 vergrößert dargestellt. Es weist eine Vielzahl von einzelnen, neben- und hintereinander angeordneten, räumlich begrenzten Sektionen 17 auf. Jeder Reihe von hintereinander angeordneten Sektionen 17 ist eine Skala 18 bzw. 19 mit Kenndaten des Betriebszustandes der Handbohrmaschine zugeordnet. Dabei enthält die in Fig. 2 linke Skala 18 Drehzahlangaben in Umdrehungen/min und die in Fig. 2 rechts Skala 19 weitere Angaben über den Betriebszustand der Handbohrmaschine Dabei bedeuten "EIN" Ein-/Ausschaltung der Handbohrmaschine "1. GANG" und "2. GANG" eingeschalteter 1. bzw. 2. Gang, "LINKS" und "RECHTS" Links- oder Rechtslauf der Bohrspindel 11, "ÜBERLAST" Warnung bei Überlastung des Elektromotors und "ÜBERLAST-AUTO" Ansprechen der automatischen Überlastabschaltung.

Jede der Anzeigefeldsektionen 17 wird von einer Signallampe 25 (Fig. 3) selektiv beleuchtet. Diese Signallampen 25 sind unmittelbar unterhalb des Anzeigefeldes 15 entsprechend dessen Ausgestaltung angeordnet und vorzugsweise als Leuchtdioden ausgebildet. Mittels einer Steuerschaltung 26, die als Mikro-Computer oder auch als reine Codierschaltung ausgebildet sein kann, werden die einzelnen Signallampen 25 entsprechend dem vorhandenen Betriebszustand der Handbohrmaschine selektiv angesteuert und zum Aufleuchten gebracht. Ist z.B. die Handbohrmaschine eingeschaltet, der 1. Gang eingelegt und läuft die Bohrspindel 11 mit einer Drehzahl von 1500 U/min im Rechtslauf, so leuchten die in Fig. 2 durch Schräffur gekennzeichneten Sektionen 17 des Anzeigefeldes 15 auf. Der Bedienende kann mit einem Blick auf das Anzeigefeld 15 den Betriebszustand erkennen. Damit der Benutzer das Anzeigefeld 15 auch während des Arbeitsvorgangs ständig im Blickfeld hat, ist dieses

- 6 -

auf der dem Handgriff 13 gegenüberliegenden Gehäuseoberseite 24 angeordnet und vorzugsweise in die Gehäusewand
bündig eingelassen (Fig. 1 und 3).

In Fig. 4 ist ein anders gestaltetes Anzeigefeld 20
gemäß einem weiteren Ausführungsbeispiel dargestellt.
Das Anzeigefeld 20 enthält ein 7-Segment-Display 21
sowie eine Symolskala 22, deren Einzelsymbole 23 selektiv, je nach Betriebszustand, beleuchtet werden können.
Dieses Anzeigefeld 20 ist in gleicher Weise auf der
dem Handgriff 13 gegenüberliegenden Gehäuseoberseite 24
des Gehäuses 10 angeordnet. Das 7-Segment-Display 21
zeigt dem Benutzer die Drehzahl der Bohrspindel 11 an,
während durch entsprechendes Aufleuchten einer oder
mehrerer der Einzelsymbole der weitere Betriebszustand
der Handbohrmaschine signalisiert wird. So bedeutet
"E" das Eingeschaltetsein der Maschine, "◄―", "―►"
Links- bzw. Rechtslauf der Maschine und das in Fig. 4
rechte Einzelsymbol 23 Überlastwarnung.

5652
24. 7. 1979

ROBERT BOSCH GMBH, 7000 Stuttgart 1

Ansprüche

1. Elektrohandwerkzeug, wie handgeführte Bohr-, Fräs-,
Sägemaschine od. dgl., insbesondere Heimwerker-
Kombinationsmaschine, mit einem Gehäuse, d a -
d u r c h   g e k e n n z e i c h n e t , daß auf
dem Gehäuse (10) ein optisches Anzeigefeld (15; 20)
einer Anzeigevorrichtung (16) angeordnet ist, auf
welchem die Kenndaten des jeweiligen Betriebszustands, wie Einschaltung, Rechts- oder Linkslauf,
Überlastung, Drehzahl und dgl. abgelesen werden
können.

2. Elektrohandwerkzeug nach Anspruch 1, d a d u r c h
g e k e n n z e i c h n e t , daß das Anzeigefeld
(15; 20) auf einer im wesentlichen einem Handgriff
(13) gegenüberliegenden Gehäuseoberseite (24), vorzugsweise in die Gehäusewand eingelassen, angeordnet
ist.

3. Elektrohandwerkzeug nach Anspruch 1 oder 2, d a -
d u r c h   g e k e n n z e i c h n e t , daß die
Anzeigevorrichtung (16) eine Reihe von neben- und/oder
hintereinander angeordneten Signallampen (25), vorzugsweise Leuchtdioden, aufweist, die jeweils unterhalb einer räumlich begrenzten Sektion (17) des Anzeigefelds (15) angeordnet sind und diese selektiv beleuchten können, und daß im Anzeigefeld (15) mindestens eine Skala (18, 19) mit Kenndaten des Betriebszustands entlang den Anzeigefeldsektionen (17) angeordnet ist.

4. Elektrohandwerkzeug nach einem der Ansprüche 1 - 3, d d a d u r c h   g e k e n n z e i c h n e t , daß das Anzeigefeld (20) mindestens ein 7-Segment-Display (21) aufweist.

5. Elektrohandwerkzeug nach Anspruch 4, d a d u r c h   g e k e n n z e i c h n e t , daß das Anzeigefeld (20) mindestens eine Symbolskala (22) aufweist, deren Einzelsymbole (23) mittels der Anzeigevorrichtung (16) selektiv beleuchtet werden können.

6. Elektrohandwerkzeug nach einem der Ansprüche 1 - 5, d a d u r c h   g e k e n n z e i c h n e t , daß die Anzeigevorrichtung (16) eine vorzugsweise als Mikrocomputer oder Codierschaltung ausgebildete Steuerschaltung (26) aufweist.

-.-.-.-.-.-.-.-

0024480

Fig.1

Fig. 2

Fig.3

Fig. 4

200
500
1000
1500
2000
2500

EIN
1.GANG
2.GANG
LINKS
RECHTS
ÜBER-LAST
ÜBER LAST AUTO

E